# EUROPEAN PATENT APPLICATION

(11) **EP 3 875 732 A1**
(43) Date of publication of application: **08.09.2021**
(21) Application number: 20771963.4
(22) Date of filing: 29.05.2020
(51) Int. Cl.: E21C 25/18

(54) **DIAMOND CUTTING PICK AND MACHINING METHOD THEREFOR**

(30) Priority: 09.01.2020 CN 202010022305
(71) Applicant: XI' AN J.W DRILLING MACHINES & TOOLS PRODUCTION CO., LTD, Xi'an, Shaanxi 710000 (CN)
(72) Inventor: YANG, Zhenglong, Xi'an Shaanxi 710000 (CN)
(74) Representative: Appleyard Lees IP LLP
(86) International application number: PCT/CN2020/093553
(87) International publication number: WO 2021/139077

(57) **Abstract**

The present invention relates to the technical field of tunneling, coal mining, tunnel engineering construction, and a method for manufacturing a cutting pick in a mushroom shape having a diamond pick head is disclosed, wherein a diamond composite pick head in a mushroom shape is formed by diamond powder and a hard alloy substrate under a condition of high temperature and high pressure; an Ag-based welding material having a low melting point and a high strength is used to melt onto a bottom face of the diamond composite pick, with the welding material presenting a water drop shape after curing due to surface tension; simultaneously the welding material is provided into an inlaying hole of the cutting pick base preheated to a certain temperature and is welded to form an integral body. In this method, the key lies in that during welding, the tip of the welding material in the water drop shape will first contact a bottom of the hole and melt, thus it is possible to sufficiently eliminate gas at the bottom of the hole and ensure that there is no slag inclusion, gas inclusion, or faulty welding face in the layer of the welding material, thus solving the problem of faulty welding due to insufficient gas elimination at the bottom of the traditional welding blind hole. Such welding processing can avoid negative effects due to high temperature welding of the diamond composite pick, effectively improve the welding strength between the diamond composite pick and the cutting pick body, and produce the diamond cutting pick having higher impact resistance and wear resistance.

## Description

### TECHNICAL FIELD

The present invention relates to the technical field of coal mine tunneling engineering construction, especially to a diamond cutting pick and its manufacturing method, tunneling machines and coal winning machines.

### BACKGROUND OF THE INVENTION

Nowadays, in the most related prior art, tunneling machines, comprehensive mining machines, shield tunneling machines and rotary drilling rigs are widely used in various coal mine tunneling engineering construction. The cutting head is a main part of the tunneling machine, comprehensive mining machine, shield tunneling machine and rotary drilling rig. The cutting pick is fixed on the cutting head by a pick seat. The cutting pick generally uses a hard alloy pick bit (thus is called hard alloy cutting pick), generally has a cone profile, and is directly fixed on a respective seat. During the process of practical operation, the cutting head will cut the rocks by its cutting pick in a manner of impacting and is a main stressed part. In the operation, when there is a rock stratum having a relatively high hardness, the impact load and friction will be high and the hard alloy cutting pick thereon will be worn rapidly, affecting the working efficiency seriously.

A traditional cutting pick consists of two portions: a hard alloy pick head and a cutting pick base, which are connected into an integral body generally by a high temperature welding technology, with Cu used as the welding material, or by a hot pressing technology. The high temperature in welding will affect the structure inside the hard alloy, thus lowering the strength, wear resistance and impact resistance of the alloy pick and thereby reducing the life of the cutting pick. Therefore, there is an urgent need for a cutting pick having higher wear resistance and impact resistance in the production.

In summary, the problem in the prior art is that the high temperature in traditional welding for cutting picks will affect the structure inside the hard alloy, thus lowering the strength, wear resistance and impact resistance of the alloy pick and reducing the life of the cutting pick. Therefore, there is a need for the technical persons in the prior art to use a new cutting pick having higher wear resistance and impact resistance.

### SUMMARY OF THE INVENTION

With respect to the technical problem(s) present in the background technologies, in the present invention, a diamond cutting pick and its manufacturing method are provided. Such diamond cutting pick has a high welding strength, an excellent wear resistant property and a high impact resistant property, and its manufacturing method can avoid negative effect(s) on the cutting pick.

The technical solutions of the present invention are provided as follows:

A diamond cutting pick comprises:
a diamond composite pick in a mushroom shape, comprising a hard alloy seat in a mushroom shape and a diamond composite layer provided on a surface of the hard alloy seat, wherein the hard alloy seat in the mushroom shape and the diamond composite layer are formed into an integral body under a high pressure at a high temperature;
a cutting pick base, comprising an inlaying hole provided at a top of the cutting pick base, a stepped truncated cone provided at an upper portion of the cutting pick base and having a wear resistant layer, and a circlip groove provided at a pick stem at a lower portion of the cutting pick base;
wherein the diamond composite pick in the mushroom shape is welded in the inlaying hole provided at the top of the cutting pick base.

Preferably, the stepped truncated cone is increased in diameter from top to bottom in a direction of a central axis of the cutting pick base, presenting a step-shape profile.

Preferably, the wear resistant layer is formed on the stepped truncated cone by surfacing welding of a WC welding rod and is built up layer by layer on the stepped truncated cone, with the thickness thereof increasing in a direction perpendicular to a direction of a central axis of the cutting pick base.

A method for manufacturing a diamond cutting pick comprises the following steps:
S1: performing a process of sandblasting and cleaning to a prepared cutting pick base, then preheating the diamond cutting pick base by a high frequency machine, and cladding-welding a high-strength WC surfacing-welding wear resistant layer at a portion thereof formed with a stepped truncated cone;
S2: performing a process of sandblasting and cleaning to the cutting pick base after cladding-welding as well as a diamond composite pick;
S3: heating the material, and heating a bottom face of the diamond composite pick in a mushroom shape as well as the cutting pick base simultaneously;
S4: uniformly applying a welding flux onto the bottom face of the diamond composite pick in the mushroom shape and removing an oxide layer, providing an Ag-based welding material therein and heating it to a temperature of 630-680°C by a high frequency welding machine, melting a desired amount of the Ag-based welding material which after melting has a water drop shape due to surface tension and is welded to the bottom face of the diamond composite pick to form an integral body; (and simultaneously heating the diamond composite pick body wherein when it is placed into the base inlaying hole, the diamond composite pick in the mushroom shape has the same temperature as that of the cutting pick base to facilitate welding);
S5: preheating an inlaying hole of the cutting pick base, and when a surface temperature thereof reaches 500°C, uniformly applying a welding flux onto an inner surface of the inlaying hole and performing a process of cleaning;
S6: placing the diamond composite pick in the mushroom shape, having the melted Ag-based welding material in the water drop shape at its bottom as prepared in the step S4, into the inlaying hole as prepared in the step S5; melting the Ag-based welding material having a low melting point and a high strength onto the bottom face of the diamond composite pick in the mushroom shape, with the welding material presenting the water drop shape after curing due to surface tension, (and simultaneously continuing heating the diamond cutting pick to a temperature of 640°C, wherein it is observed that when the welding material on the bottom face of the diamond composite pick in the mushroom shape is gradually melted, the welding material flows to a predetermined position by a pressure due to the self gravity of the composite pick; and rocking the diamond composite pick in all directions by tweezers and determining that no bubbling occurs around the welding seam); and
S7: closing the heating device after the diamond cutting pick is heated to a temperature of 680°C, and placing the diamond cutting pick into an incubator for heat preservation after the diamond cutting pick is cooled to a temperature below 600°C.

Preferably, it comprises: simultaneously heating the diamond composite pick and the cutting pick base, wherein the bottom face of the diamond composite pick is inverted, facing upwards to fuse the Ag-based welding material in the water drop shape.

Preferably, when the welding material in the water drop shape is adaptively melted at the inlaying hole, the tip of the water drop shape will first contact a bottom of the hole and melt, thus it is possible to sufficiently eliminate gas at the bottom of the hole and ensure that there is no slag inclusion, gas inclusion, or faulty welding face in the layer of the welding material, with the diamond composite pick in the mushroom shape pressing downwards due to its self weight such that the air can be effectively eliminated from the welding seam, avoiding faulty welding.

In the present invention, a diamond cutting pick and its manufacturing method are provided, having the following advantages: In the present invention, a method for manufacturing a cutting pick in a mushroom shape having a diamond pick head is disclosed, wherein a diamond composite pick head in a mushroom shape is formed by diamond powder and a hard alloy substrate under a condition of high temperature and high pressure; an Ag-based welding material having a low melting point and a high strength is used to melt onto a bottom face of the diamond composite pick, with the welding material presenting a water drop shape after curing due to surface tension; simultaneously the welding material is provided into an inlaying hole of the cutting pick base preheated to a certain temperature and is welded to form an integral body. In this method, the key lies in that during welding, the tip of the welding material in the water drop shape will first contact a bottom of the hole and melt, thus it is possible to sufficiently eliminate gas at the bottom of the hole and ensure that there is no slag inclusion, gas inclusion, or faulty welding face in the layer of the welding material, thus solving the problem of faulty welding due to insufficient gas elimination at the bottom of the traditional welding blind hole. Such welding processing can avoid negative effects due to high temperature welding of the diamond composite pick, effectively improve the welding strength between the diamond composite pick and the cutting pick body, and produce the diamond cutting pick having higher impact resistance and wear resistance.

### DESCRIPTION OF THE DRAWINGS

Figure 1 is a schematic structure view of a diamond cutting pick as provided in an embodiment of the present invention.
Figure 2 is a schematic structure view of a cutting pick base as provided in an embodiment of the present invention.
Figure 3 is a schematic structure view of a diamond composite pick in a mushroom shape as provided in an embodiment of the present invention.
Figure 4 is a schematic structure view of a diamond composite pick in a mushroom shape, which forms a structure in a water drop shape after dissolution of a welding material, as provided in an embodiment of the present invention.
Figure 5 is a flowchart of a method for manufacturing a diamond cutting pick as provided in an embodiment of the present invention.

The reference numerals of the parts in the figures are shown as below:
1: cutting pick base
2: cutting tooth
3: bottom support in water drop shape
4: inlaying hole
5: stepped truncated cone
6: circlip groove
7: wear resistant layer

### DESCRIPTION OF EXEMPLARY EMBODIMENTS

Hereinafter, the technical solutions of the present invention will be described clearly and completely in connection with specific embodiments. The described embodiments are only some embodiments of the present invention, rather than all embodiments. All the other embodiments obtained by those skilled in the art based on the embodiments of the present invention and without any inventive work will fall within the protection scope of the present invention.

In the figures, the parts same in structure are indicated by the same reference numeral and the components similar in structure or function are indicated by the similar reference numerals. The size and thickness of each component shown in the figures are illustrated arbitrarily and the size and thickness of each component are not limited in the present invention. In order to make the illustration clearer, the thickness of the part is exaggerated appropriately in some portion(s) of the figures.

The directional terms as mentioned in the present invention, such as upper, lower, front, rear, left, right, in, out, lateral, etc, are only directions in the figures, for explaining and describing the present invention only, rather than limiting the protection scope of the present invention.

### Embodiment 1:

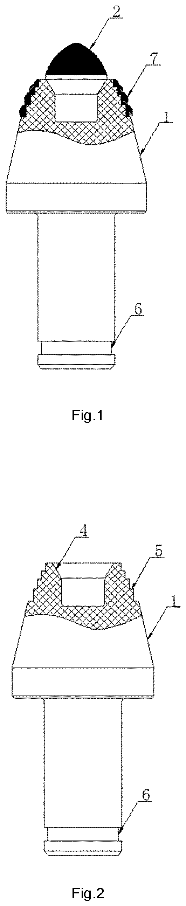

As shown in figure 1, figure 1 is a schematic structure view of a diamond cutting pick of the present invention wherein a diamond composite pick in a mushroom shape (not indicated) is welded in an inlay hole of a cutting pick base 1. The diamond composite pick in a mushroom shape is coated, on a cutting tooth at its upper portion, with a layer of diamond composite material for improving the strength, impact resistance and wear resistance of the tooth face. Moreover, the cutting pick base is provided, in a wearing region at its upper portion, with a wear resistant layer 7 which circumferentially covers the wearing region at the upper portion of the cutting pick base 1. The cutting pick base is provided, at its lower portion, with a circlip groove 6 for connection with a cutting pick seat.

As shown in figure 2, figure 2 is a schematic structure view of a cutting pick base 1 as provided in an embodiment of the present invention. The cutting pick base 1 is provided at its upper portion with an inlaying hole 4 which cooperates with a connecting shaft at the bottom of the diamond composite pick. The cutting pick base 1 is provided at an outer surface of its upper portion with a stepped truncated cone 5 which is built up layer by layer in a direction of an axis of the cutting pick base 1, with the thickness thereof increasing in a direction perpendicular to the direction of the axis of the cutting pick base 1. The cutting pick base 1 is provided at its lower portion with a circlip groove 6.

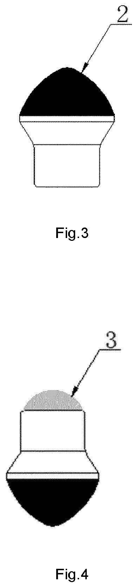

As shown in figure 3, figure 3 is a schematic structure view of a diamond composite pick in a mushroom shape as provided in an embodiment of the present invention. The diamond composite pick in a mushroom shape is formed into an integral body by diamond powder and a hard alloy substrate in a mushroom shape under a condition of high temperature and high pressure.

As shown in figure 4, figure 4 is a schematic structure view of a diamond composite pick in a mushroom shape, which forms a structure 3 in a water drop shape after dissolution of a welding material, as provided in an embodiment of the present invention. The following steps may be performed: uniformly applying a welding flux onto the bottom face of the diamond composite pick in a mushroom shape and removing an oxide layer, providing an Ag-based welding material therein and heating it to a temperature of 640-680°C by a high frequency welding machine, melting a desired amount of the Ag-based welding material which after melting has a water drop shape and is welded to the bottom face of the diamond composite pick to form an integral body, thus forming the structure 3 in the water drop shape.

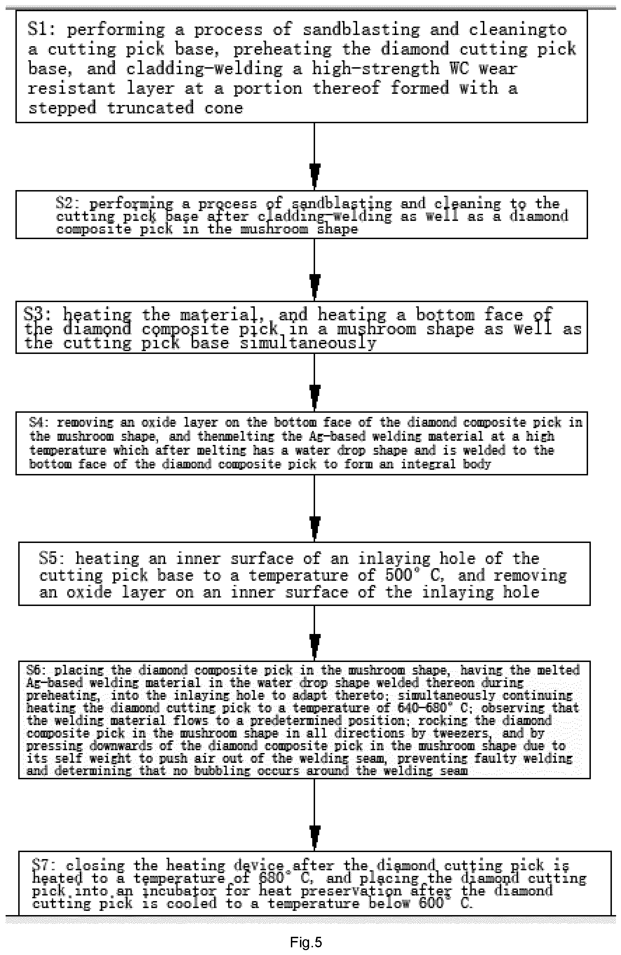

As shown in figure 5, figure 5 is a flowchart of a method for manufacturing a diamond cutting pick as provided in an embodiment of the present invention. The specific operations are performed by the following steps: a method for manufacturing a diamond cutting pick comprising the following steps:
S1: performing a process of sandblasting and cleaning to a prepared cutting pick base, then preheating the diamond cutting pick base by a high frequency machine, and cladding-welding a high-strength WC surfacing-welding wear resistant layer at a portion thereof formed with a stepped truncated cone;
S2: performing a process of sandblasting and cleaning to the cutting pick base after cladding-welding as well as a diamond composite pick;
S3: heating the material, and heating a bottom face of the diamond composite pick in a mushroom shape as well as the cutting pick base simultaneously;
S4: uniformly applying a welding flux onto the bottom face of the diamond composite pick in the mushroom shape and removing an oxide layer, providing an Ag-based welding material therein and heating it to a temperature of 630-680°C by a high frequency welding machine, melting a desired amount of the Ag-based welding material which after melting has a water drop shape due to surface tension and is welded to the bottom face of the diamond composite pick to form an integral body; (and simultaneously heating the diamond composite pick body wherein when it is placed into the base inlaying hole, the diamond composite pick in the mushroom shape has the same temperature as that of the cutting pick base to facilitate welding).
S5: preheating an inlaying hole of the cutting pick base, and when a temperature of a surface thereof reaches 500°C, uniformly applying a welding flux onto an inner surface of the inlaying hole and performing a process of cleaning;
S6: placing the diamond composite pick in the mushroom shape, having the melted Ag-based welding material in the water drop shape at its bottom as prepared in the step S4, into the inlaying hole as prepared in the step S5; melting the Ag-based welding material having a low melting point and a high strength onto the bottom face of the diamond composite pick in the mushroom shape, with the welding material presenting the water drop shape after curing due to surface tension, (and simultaneously continuing heating the diamond cutting pick to a temperature of 640°C, wherein it is observed that when the welding material on the bottom face of the diamond composite pick in the mushroom shape is gradually melted, the welding material flows to a predetermined position by a pressure due to the self gravity of the composite pick; and rocking the diamond composite pick in all directions by tweezers and determining that no bubbling occurs around the welding seam; and
S7: closing the heating device after the diamond cutting pick is heated to a temperature of 680°C, and placing the diamond cutting pick into an incubator for heat preservation after the diamond cutting pick is cooled to a temperature below 600°C.

The above description is only for the preferred specific embodiments of the present invention. However, the protection scope of the present invention is not limited thereto. Any equivalent substitution or modification made by those skilled in the art based on the technical solutions and inventive concepts of the present invention and within the technical scope of the present disclosure should be covered within the protection scope of the present invention.

## Claims

1. A diamond cutting pick, **characterized in that** it comprises:
a diamond composite pick in a mushroom shape, comprising a hard alloy seat in a mushroom shape and a diamond composite layer provided on a surface of the hard alloy seat, wherein the hard alloy seat in the mushroom shape and the diamond composite layer are formed into an integral body under a high pressure at a high temperature;
a cutting pick base, comprising an inlaying hole provided at a top of the cutting pick base, a stepped truncated cone provided at an upper portion of the cutting pick base and having a wear resistant layer, and a circlip groove provided at a pick stem at a lower portion of the cutting pick base;
wherein the diamond composite pick in the mushroom shape is welded in the inlaying hole provided at the top of the cutting pick base.

2. The diamond cutting pick according to claim 1, **characterized in that** the stepped truncated cone is increased in diameter from top to bottom in a direction of a central axis of the cutting pick base, presenting a step-shape profile.

3. The diamond cutting pick according to claim 1, **characterized in that** the wear resistant layer is formed on the stepped truncated cone by surfacing welding of a WC welding rod and is built up layer by layer on the stepped truncated cone, with the thickness thereof increasing in a direction perpendicular to a direction of a central axis of the cutting pick base.

4. A method for manufacturing a diamond cutting pick, **characterized in that** the method for manufacturing a diamond cutting pick comprises the following steps:
S1: performing a process of sandblasting and cleaning to a prepared cutting pick base, then preheating the diamond cutting pick base by a high frequency machine, and cladding-welding a high-strength WC surfacing-welding wear resistant layer at a portion thereof formed with a stepped truncated cone;
S2: performing a process of sandblasting and cleaning to the cutting pick base after cladding-welding as well as a diamond composite pick;
S3: heating the material, and heating a bottom face of the diamond composite pick in a mushroom shape as well as the cutting pick base simultaneously;
S4: uniformly applying a welding flux onto the bottom face of the diamond composite pick in the mushroom shape and removing an oxide layer, providing an Ag-based welding material therein and heating it to a temperature of 630-680°C by a high frequency welding machine, melting a desired amount of the Ag-based welding material which after melting has a water drop shape due to surface tension and is welded to the bottom face of the diamond composite pick to form an integral body;
S5: preheating an inlaying hole of the cutting pick base, and when a surface temperature thereof reaches 500°C, uniformly applying a welding flux onto an inner surface of the inlaying hole and performing a process of cleaning;
S6: placing the diamond composite pick in the mushroom shape, having the melted Ag-based welding material in the water drop shape at its bottom as prepared in the step S4, into the inlaying hole as prepared in the step S5; melting the Ag-based welding material having a low melting point and a high strength onto the bottom face of the diamond composite pick in the mushroom shape, with the welding material presenting the water drop shape after curing due to surface tension, and simultaneously continuing heating the diamond cutting pick to a temperature of 640°C, wherein it is observed that when the welding material on the bottom face of the diamond composite pick in the mushroom shape is gradually melted, the welding material flows to a predetermined position by a pressure due to the self gravity of the composite pick; and rocking the diamond composite pick in all directions by tweezers and determining that no bubbling occurs around the welding seam; and
S7: closing the heating device after the diamond cutting pick is heated to a temperature of 680°C, and placing the diamond cutting pick into an incubator for heat preservation after the diamond cutting pick is cooled to a temperature below 600°C.

5. The method for manufacturing a diamond cutting pick according to claim 4, **characterized in that** it comprises: simultaneously heating the diamond composite pick and the cutting pick base, wherein the bottom face of the diamond composite pick in a mushroom shape is inverted, facing upwards to fuse the Ag-based welding material in the water drop shape; and simultaneously heating a diamond pick body based thereon.

6. The method for manufacturing a diamond cutting pick according to claim 5, **characterized in that** when the welding material in the water drop shape is adaptively melted at the inlaying hole, the tip of the water drop shape will first contact a bottom of the hole and melt, thus it is possible to sufficiently eliminate gas at the bottom of the hole and ensure that there is no slag inclusion, gas inclusion, or faulty welding face in the layer of the welding material, with the diamond composite pick in the mushroom shape pressing downwards due to its self weight such that the air can be effectively eliminated from the welding seam, avoiding faulty welding.
